(19) 

Europäisches
Patentamt
European
Patent Office
Office européen
des brevets

(11) **EP 4 782 872 A1**

(12) **EUROPEAN PATENT APPLICATION**
published in accordance with Art. 153(4) EPC

(43) Date of publication:
**29.07.2026 Bulletin 2026/31**

(21) Application number: **23955152.6**

(22) Date of filing: **12.10.2023**

(51) International Patent Classification (IPC):
**G01S 7/41** $^{(2006.01)}$

(52) Cooperative Patent Classification (CPC):
**G01S 7/41**

(86) International application number:
**PCT/CN2023/124290**

(87) International publication number:
**WO 2025/076772 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **WANG, Ruihua
Shenzhen, Guangdong 518129 (CN)**
• **WANG, Fan
Shenzhen, Guangdong 518129 (CN)**

(74) Representative: **Thun, Clemens
Mitscherlich PartmbB
Karlstraße 7
80333 München (DE)**

(54) **SENSING METHOD AND COMMUNICATION APPARATUS**

(57)     A sensing method and a communication apparatus are provided, relating to the field of communication and sensing. A two-dimensional discrete m-sequence is provided, so that a sensing function of an access network device can be implemented. The method includes: generating a first sequence, and sending a first sensing signal. The first sequence is obtained by transforming an m-sequence based on a cyclic shift and a Doppler shift, and the first sensing signal is determined based on the first sequence.

FIG. 3

EP 4 782 872 A1

**Description**

**TECHNICAL FIELD**

This application relates to the field of communication and sensing, and in particular, to a sensing method and a communication apparatus.

**BACKGROUND**

Radars obtain physical information (for example, range, velocity, and angle) of a target by transmitting sensing signals and receiving echo signals. The choice of sensing signal has a significant impact on radar performance. A co-located (co-located, C) multiple-input multiple-output (multiple-input multiple-output, MIMO) radar (referred to as C-MIMO radar below for short) has an advantage of achieving high angular resolution in sensing, and is capable of sending a plurality of sensing signals. In integrated sensing and communication, a sensing function of an access network device can help to improve communication accuracy and efficiency. By leveraging a multi-antenna advantage of the access network device, functions of the C-MIMO radar can be integrated into the access network device. However, how to implement the sensing function of the access network device becomes a problem to be resolved urgently.

**SUMMARY**

Embodiments of this application provide a sensing method and a communication apparatus, to implement a sensing function of an access network device by designing a two-dimensional discrete m-sequence as a sensing sequence.

To achieve the foregoing objective, the following technical solutions are used in this application:

According to a first aspect, a sensing method is provided. The method may be performed by an access network device, or may be performed by a component of the access network device, for example, a processor, a chip, or a chip system of the access network device, or may be implemented by a logical module or software that can implement all or some functions of the access network device. The method includes: generating a first sequence, where the first sequence is obtained by transforming a modulated m-sequence based on a cyclic shift and a Doppler shift; and sending a first sensing signal, where the first sensing signal is determined based on the first sequence.

Based on the sensing method, the access network device transforms a modulated m-sequence based on a Doppler shift and a cyclic shift to obtain a two-dimensional discrete m-sequence, that is, the first sequence. The first sequence has a good auto-correlation function characteristic, a good ambiguity function characteristic, and the like, so that a sensing signal is formed based on the first sequence to implement target sensing. In addition, during MIMO sensing, by setting different Doppler shifts and cyclic shifts of first sequences, the access network device may distinguish between echo signals of a plurality of sensing signals transmitted by the access network device, as well as an echo signal corresponding to a sensing signal sent by another access network device.

In this embodiment of this application, an m-sequence is a sequence including 0 and 1, and in the modulated m-sequence, 0 in the m-sequence is changed to 1, and 1 in the m-sequence is changed to -1. That is, the modulated m-sequence is a sequence including 1 and -1.

In a possible design scheme, that the first sequence is obtained by transforming the modulated m-sequence based on the cyclic shift and the Doppler shift may include: the first sequence is obtained by transforming a second sequence based on the cyclic shift and the Doppler shift, and the second sequence is obtained by performing discrete Fourier transform on the modulated m-sequence. That is, the access network device may perform discrete Fourier transform (DFT) on a modulated m-sequence whose length is L to obtain a discrete frequency-domain sequence (that is, the second sequence) whose length is L, and transform the second sequence based on a selected cyclic shift and Doppler shift to obtain the first sequence.

In a possible design scheme, a cross-ambiguity function between two first sequences different in at least one of the Doppler shift and the cyclic shift is obtained by translating an auto-ambiguity function of the second sequence on a delay-Doppler shift plane based on at least one of a difference between cyclic shifts and a difference between Doppler shifts of the two first sequences. That is, a cross-ambiguity function between any two first sequences different in at least one parameter of the cyclic shift and the Doppler shift may be obtained by translating, based on a difference between cyclic shifts and/or a difference between Doppler shifts of the two first sequences, an auto-ambiguity function of an m-sequence experiencing modulation and discrete Fourier transform (DFT).

In a possible design scheme, the m-sequence corresponds to a $d^{th}$-degree primitive polynomial, the first sequence has $(2^d - 1)^2$ values, a length of the first sequence is $2^d - 1$, and d is a positive integer. Because a cyclic shift of a first sequence has $2^d - 1$ possible values, and each cyclic shift corresponds to $2^d - 1$ Doppler shifts, an m-sequence of a $d^{th}$-degree primitive polynomial may form $(2^d - 1)^2$ two-dimensional discrete m-sequences. In other words, the first sequence has $(2^d - 1)^2$ values, that is, the first sequence may be one of $(2^d - 1)^2$ different two-dimensional m-sequences. Therefore, it can be learned that the first sequence has much more possible values than the m-sequence. This increases a sequence capacity.

In a possible design scheme, the cyclic shift is related to a maximum delay, the maximum delay is a maximum delay from sending a sensing signal to receiving an echo signal within a sensing range, the Doppler shift is related to a maximum Doppler shift, and the maximum Doppler shift is a maximum Doppler shift of an echo signal generated due to motion of a sensing target within the sensing range. In this embodiment of this application, the cyclic shift and the Doppler shift for forming the first sequence may be determined based on the maximum delay and the maximum Doppler shift within the sensing range respectively, to ensure that a sensing signal formed by the first sequence can sense a target within the sensing range.

In a possible design scheme, the cyclic shift may meet the following relationship: $p_u = u * a$. $p_u < p_u$ is the cyclic shift, $a$ is the maximum delay, $u$ is a first multiple, L is the length of the first sequence, and $p_u$, $a$, $u$ the first sequence is an integer multiple of the maximum delay. Therefore, the access network device may determine different cyclic shifts by selecting different first multiples, to determine different first sequences.

In a possible design scheme, the Doppler shift may meet the following relationship: $\theta_v = v \ b$. $-\pi + \frac{b}{2} \leq \theta_v \leq \pi - \frac{b}{2}$, $\theta_v$ is the Doppler shift, $\frac{b}{2}$ is the maximum Doppler shift, L $\times$ b is an integer multiple of $2\pi$, v is a second multiple, L is the length of the first sequence, and v is a positive integer. That is, the Doppler shift of the first sequence is an integer multiple of twice the maximum Doppler shift. The access network device may determine different Doppler shifts by selecting different second multiple, to determine different first sequences.

In a possible design scheme, an nth element in the first sequence may meet the following relationship:

$$B_{p_u}^{\theta_v}(n) = k_{(n+p_u)mod(L)} * e^{jn\theta_v}$$

. $0 \leq n \leq L - 1$, $k_{(n+pu)}mod(L)$ is one of $B = [k_0, k_1, ... , k_{L-1}]$, n is a number of an element in the first sequence, $\theta_v$ is the Doppler shift, $p_u$ is the cyclic shift, L is the length of the first sequence, B is the second sequence obtained by performing discrete Fourier transform on the modulated m-sequence, and n and L are positive integers.

In a possible design scheme, an auto-ambiguity function of the first sequence has a unique peak, to have anti-Doppler performance, and uniquely identify the first sequence.

In a possible design scheme, the peak is within a range $[0, a] \times [-\frac{b}{2} + \theta_v, \frac{b}{2} + \theta_v]$ on the delay-Doppler shift plane, $a$ is the maximum delay, $\frac{b}{2}$ is the maximum Doppler shift, and $\theta_v$ is the Doppler shift.

In a possible design scheme, a cross-ambiguity function between the first sequence and the second sequence is obtained by translating the auto-ambiguity function of the second sequence on the delay-Doppler shift plane based on the cyclic shift and the Doppler shift of the first sequence. That is, in this embodiment of this application, the cross-ambiguity function generated by the first sequence and the second sequence is also a function having a unique peak, and a location of the peak may be obtained by translating the auto-ambiguity function of the second sequence.

In a possible design scheme, a peak of a cross-ambiguity function of a third sequence relative to a fourth sequence is on a delay plane outside [0, $a$], and the third sequence and the fourth sequence are first sequences with a same Doppler shift but different cyclic shifts. Therefore, the fourth sequence serves as an interfering sequence of the third sequence. When the access network device sends a plurality of first sensing signals, the plurality of first sensing signals may be generated by using first sequences with a same Doppler shift but different cyclic shifts. When a first sensing signal generated by using the third sequence serves as a target sensing signal, a peak of a cross-ambiguity function generated by interference, to the target sensing signal, of an echo signal generated by a first sensing signal generated by using any other sequence (for example, the fourth sequence) with a same Doppler shift as but a different cyclic shift from the third sequence is on the delay plane outside [0, $a$], so that the access network device can distinguish, in a received mixed signal based on a characteristic of the cross-ambiguity function, a peak generated by an echo signal corresponding to the target sensing signal, and then determine information such as a relative position and a relative velocity of a sensing target based on delay and Doppler shift locations of the peak generated by the target sensing signal and the corresponding echo signal.

In a possible design scheme, a peak of a cross-ambiguity function of a fifth sequence relative to a sixth sequence is on a Doppler shift plane outside $[-\frac{b}{2} + \theta_{v1}, \frac{b}{2} + \theta_{v1}]$, the fifth sequence and the sixth sequence are first sequences with different Doppler shifts, and $\theta_{v1}$ is a Doppler shift of the fifth sequence. Therefore, the sixth sequence serves as an interfering signal of the fifth sequence. In a scenario in which a plurality of access network devices perform sensing, different access network devices may generate different first sensing signals by using first sequences with different Doppler shifts. When a first sensing signal generated by using the fifth sequence serves as a target sensing signal, a peak of a cross-ambiguity function generated by interference, to the target sensing signal, of an echo signal generated by a first sensing signal generated by using any other first sequence with a different Doppler shift from the fifth sequence is on the Doppler shift plane outside $\left[-\frac{b}{2} + \theta_{v1}, \frac{b}{2} + \theta_{v1}\right]$, so that the access network device can distinguish, in a received mixed signal based on a characteristic of the cross-ambiguity function, a peak generated by an echo signal corresponding to the target sensing signal, and then determine information such as a relative position and a relative velocity of a sensing target based on delay and Doppler shift locations of the peak generated by the target sensing signal and the corresponding echo signal.

In a possible design scheme, a plurality of first sequences have a same Doppler shift but different cyclic shifts, the plurality of first sequences include a target sequence, and the sensing method provided in this embodiment of this application may further include: receiving a first mixed signal; and determining, based on a location of a first peak in at least one peak of a cross-ambiguity function formed by a target sensing signal and the first mixed signal, whether the first peak is a peak generated by the target sensing signal and an echo signal corresponding to the target sensing signal. The target sensing signal is generated based on the target sequence.

In a possible design scheme, the determining, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on the delay plane outside [0, *a*], determining that the first peak is not the peak generated by the target sensing signal and the echo signal corresponding to the target sensing signal. *a* is the maximum delay.

In a possible design scheme, the determining, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on a Doppler shift plane outside $\left[-\frac{b}{2} + \theta_{v2}, \frac{b}{2} + \theta_{v2}\right]$, determining that the first peak is not the peak generated by the target sensing signal and the echo signal corresponding to the target sensing signal. $\frac{b}{2}$ is the maximum Doppler shift, and $\theta_{v2}$ is a Doppler shift of the target sequence.

In a possible design scheme, the determining, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on a delay-Doppler shift plane within $[0, a] \times \left[-\frac{b}{2} + \theta_{v2}, \frac{b}{2} + \theta_{v2}\right]$, determining that the first peak is the peak generated by the target sensing signal and the echo signal corresponding to the target sensing signal. *a* is the maximum delay, $\frac{b}{2}$ is the maximum Doppler shift, and $\theta_{v2}$ is a Doppler shift of the target sequence.

In a possible design scheme, the Doppler shift may be preconfigured, or may be determined through negotiation with another access network device, or may be configured by a control node.

According to a second aspect, a communication apparatus is provided to implement the foregoing methods. The communication apparatus may be the access network device in the first aspect, or an apparatus including the access network device, or an apparatus included in the access network device, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate a first sequence. The first sequence is obtained by transforming a modulated m-sequence based on a cyclic shift and a Doppler shift. The transceiver module is configured to send a first sensing signal. The first sensing signal is determined based on the first sequence.

In a possible design scheme, that the first sequence is obtained by transforming the modulated m-sequence based on the cyclic shift and the Doppler shift may include: the first sequence is obtained by transforming a second sequence based on the cyclic shift and the Doppler shift, and the second sequence is obtained by performing discrete Fourier transform on the modulated m-sequence.

In a possible design scheme, a cross-ambiguity function between two first sequences different in at least one of the Doppler shift and the cyclic shifts is obtained by translating an auto-ambiguity function of the second sequence on a delay-Doppler shift plane based on at least one of a difference between cyclic shifts and a difference between Doppler shifts of the two first sequences.

In a possible design scheme, the m-sequence corresponds to a $d^{th}$-degree primitive polynomial, the first sequence has $(2^d - 1)^2$ values, a length of the first sequence is $2^d - 1$, and d is a positive integer.

In a possible design scheme, the cyclic shift is related to a maximum delay, the maximum delay is a maximum delay from sending a sensing signal to receiving an echo signal within a sensing range, the Doppler shift is related to a maximum Doppler shift, and the maximum Doppler shift is a maximum Doppler shift of an echo signal generated due to motion of a sensing target within the sensing range.

In a possible design scheme, the cyclic shift may meet the following relationship: $p_u = u * a$. $p_u < p_u$ is the cyclic shift, $a$ is the maximum delay, $u$ is a first multiple, L is the length of the first sequence, and $p_u$, $a$, $u$

In a possible design scheme, the Doppler shift may meet the following relationship: $\theta_v = v * b$.

$$-\pi + \frac{b}{2} \leq \theta_v \leq \pi - \frac{b}{2}$$, $\theta_v$ is the Doppler shift, $\frac{b}{2}$ is the maximum Doppler shift, L × b is an integer multiple of $2\pi$, v is a second multiple, L is the length of the first sequence, and v is a positive integer.

In a possible design scheme, an $n^{th}$ element in the first sequence may meet the following relationship:

$$B_{p_u}^{\theta_v}(n) = k_{(n+p_u)mod(L)} * e^{jn\theta_v}$$

. $0 \leq n \leq L - 1$, $k_{(n+pu)}mod(L)$ is one of $B = [k_0, k_1, \ldots, k_{L-1}]$, n is a number of an element in the first sequence, $\theta_v$ is the Doppler shift, $p_u$ is the cyclic shift, L is the length of the first sequence, B is the second sequence obtained by performing discrete Fourier transform on the modulated m-sequence, and n and L are positive integers.

In a possible design scheme, an auto-ambiguity function of the first sequence has a unique peak.

In a possible design scheme, the peak is within a range $[0, a] \times [-\frac{b}{2} + \theta_v, \frac{b}{2} + \theta_v]$ on the delay-Doppler shift plane, $a$ is the maximum delay, $\frac{b}{2}$ is the maximum Doppler shift, and $\theta_v$ is the Doppler shift.

In a possible design scheme, a cross-ambiguity function between the first sequence and the second sequence is obtained by translating the auto-ambiguity function of the second sequence on the delay-Doppler shift plane based on the cyclic shift and the Doppler shift of the first sequence.

In a possible design scheme, a peak of a cross-ambiguity function of a third sequence relative to a fourth sequence is on a delay plane outside [0, $a$], and the third sequence and the fourth sequence are first sequences with a same Doppler shift but different cyclic shifts.

In a possible design scheme, a peak of a cross-ambiguity function of a fifth sequence relative to a sixth sequence is on a Doppler shift plane outside $[-\frac{b}{2} + \theta_v, \frac{b}{2} + \theta_v]$, and the fifth sequence and the sixth sequence are first sequences with different Doppler shifts.

In a possible design scheme, a plurality of first sequences have a same Doppler shift but different cyclic shifts, and the first sequences include a target sequence. The transceiver module is further configured to receive a first mixed signal. The processing module is further configured to determine, based on a location of a first peak in at least one peak of a cross-ambiguity function formed by a target sensing signal and the first mixed signal, whether the first peak is a peak generated by the target sensing signal and an echo signal corresponding to the target sensing signal. The target sensing signal is generated based on the target sequence.

In a possible design scheme, that the processing module is further configured to determine, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on the delay plane outside [0, $a$], the processing module is configured to determine that the first peak is not the peak generated by the target sensing signal and the echo signal corresponding to the target sensing signal. $a$ is the maximum delay.

In a possible design scheme, that the processing module is further configured to determine, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on a delay-Doppler shift plane within

$$[-\frac{b}{2} + \theta_{v2}, \frac{b}{2} + \theta_{v2}]$$, the processing module is configured to determine that the first peak is not the peak generated by the target sensing signal and the echo signal corresponding to the target sensing signal. $\frac{b}{2}$, is the maximum Doppler shift, and $\theta_{v2}$ is a Doppler shift of the target sequence.

In a possible design scheme, that the processing module is further configured to determine, based on the location of the first peak in the at least one peak of the cross-ambiguity function formed by the target sensing signal and the first mixed signal, whether the first peak is the peak generated by the target sensing signal and the echo signal corresponding to the target sensing signal may include: when the first peak is on a Doppler shift plane outside $[0, a] \times [-\frac{b}{2} + \theta_{v2}, \frac{b}{2} + \theta_{v2}]$, the processing module is configured to determine that the first peak is the peak generated by the target sensing signal and the echo signal corresponding to the target sensing signal. $a$ is the maximum delay, $\frac{b}{2}$ is the maximum Doppler shift, and $\theta_{v2}$ is a Doppler shift of the target sequence.

In a possible design scheme, the Doppler shift may be preconfigured, or may be determined through negotiation with another access network device, or may be configured by a control node.

In a possible design scheme, the transceiver module may include a receiving module and a sending module. The sending module is configured to implement a sending function of the communication apparatus according to the second aspect, and the receiving module is configured to implement a receiving function of the communication apparatus according to the second aspect.

In a possible design scheme, the communication apparatus according to the second aspect may further include a storage module, and the storage module stores a program or instructions. When the processing module executes the program or the instructions, the communication apparatus according to the second aspect is enabled to perform the method according to the first aspect.

According to a third aspect, a communication apparatus is provided (for example, the communication apparatus may be a chip or a chip system). The communication apparatus includes a processor, configured to implement a function in the first aspect.

In a possible design scheme, the communication apparatus may further include a memory, and the memory is configured to store necessary program instructions and data. The processor is coupled to the memory, and the processor is configured to execute a computer program or instructions stored in the memory, to enable the communication apparatus to perform the method according to the first aspect.

In a possible design scheme, the communication apparatus according to the third aspect may further include a transceiver. The transceiver may be a transceiver circuit or an interface circuit. The transceiver may be used by the communication apparatus according to the third aspect to communicate with another communication apparatus.

In a possible design scheme, the processor may be integrated with the memory.

In some possible designs, when the apparatus is a chip system, the apparatus may include a chip, or may include a chip and another discrete component.

According to a fourth aspect, a communication apparatus is provided. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to the first aspect by using a logic circuit or executing code instructions.

According to a fifth aspect, a communication apparatus is provided. The communication apparatus may be an access network device, or may be a module or unit (for example, a chip, a chip system, or a circuit) that is in the access network device and that performs, in one-to-one correspondence, a method/operation/step/action described in the first aspect, or may be used in combination with the access network device.

It may be understood that when the communication apparatus provided in any one of the third aspect to the fifth aspect is a chip, the foregoing sending action/function may be understood as outputting, and the foregoing receiving action/function may be understood as inputting.

According to a sixth aspect, a computer-readable storage medium is provided. The computer-readable storage medium stores a computer program or instructions. When the computer program or the instructions are run on a communication apparatus, the communication apparatus is enabled to perform the method according to the first aspect.

According to a seventh aspect, a computer program product including instructions is provided, including computer program code. When the computer program code is run on a communication apparatus, the communication apparatus is enabled to perform the method according to the first aspect.

According to an eighth aspect, a communication system is provided, to implement the access network device in the method according to the first aspect.

**BRIEF DESCRIPTION OF DRAWINGS**

FIG. 1A and FIG. 1B are diagrams of images of an auto-correlation function and an ambiguity function of an m-sequence;

FIG. 2 is a diagram of an architecture of a sensing communication system according to an embodiment of this application;

FIG. 3 is a schematic flowchart of a sensing method according to an embodiment of this application;

FIG. 4A to FIG. 4C are diagrams of images of an auto-ambiguity function and a cross-ambiguity function according to an embodiment of this application;

FIG. 5 is a diagram of a structure of a communication apparatus according to an embodiment of this application; and

FIG. 6 is a diagram of a structure of another communication apparatus according to an embodiment of this application.

## DESCRIPTION OF EMBODIMENTS

To better understand embodiments of this application, the following several points are described before embodiments of this application.

First, in embodiments of this application, first, second, and various numbers are merely intended for distinguishing for ease of description, rather than to limit the scope of embodiments of this application. For example, different indication information is distinguished. For another example, a first network area and a second network area are merely intended to distinguish between different areas, rather than limit an order thereof. A person skilled in the art may understand that words such as "first" and "second" neither limit a quantity or an execution order, nor indicate a definite difference.

Second, in embodiments of this application, descriptions such as "when...", "in a case that...", "in response to...", and "if..." mean that a device (for example, a terminal device or a network device) performs corresponding processing under an objective condition, neither limiting time or requiring the device (for example, the terminal device or the network device) to necessarily perform a determining action during implementation, nor meaning other limitations.

Third, in embodiments of this application, a phrase such as "example" or "for example" is used to give an example, an illustration, or a description. Any embodiment or design scheme described as an "example" or "for example" in embodiments of this application should not be explained as being more preferred or having more advantages than another embodiment or design scheme. Exactly, use of the phrase such as "example" or "for example" is intended to present a related concept in a specific manner for ease of understanding.

Fourth, in embodiments of this application, "at least one" means one or more, "a plurality of' means two or more, and "and/or" describes an association relationship between associated objects, and indicates that three relationships may exist. For example, A and/or B may indicate the following cases: only A exists, both A and B exist, and only B exists, where A and B may be singular or plural. The character "/" generally indicates an "or" relationship between the associated objects. An expression "at least one of the following items (pieces)" or a similar expression thereof means any combination of the plurality of items, including a singular item (piece) or any combination of plural items (pieces). For example, at least one item (piece) of a, b, or c may represent a, b, c, a and b, a and c, b and c, or a, b, and c, where a, b, and c may be singular or plural.

The following describes a communication system, a used network element, and related terms in embodiments of this application.

Aspects, embodiments, or features are presented in embodiments of this application by describing a system that may include a plurality of devices, components, modules, or the like. It should be appreciated and understood that, each system may include another device, component, module, or the like, and/or may not include all devices, components, modules, or the like discussed with reference to accompanying drawings. In addition, a combination of these schemes may alternatively be used.

Technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet-of-vehicles communication system, a 4th-generation (4th-generation, 4G) mobile communication system such as a long term evolution (long term evolution, LTE) system or a worldwide interoperability for microwave access (worldwide interoperability for microwave access, WiMAX) communication system, a 5th-generation (5th-generation, 5G) mobile communication system such as a new radio (new radio, NR) system, and a future communication system such as a 6th-generation (6th-generation, 6G) mobile communication system.

### 1. MIMO

A MIMO technology means that a transmit end and a receive end respectively use a plurality of transmit antennas and a plurality of receive antennas to transmit and receive signals, to improve communication quality. In a MIMO system, the transmit end may map a to-be-sent data signal to the plurality of transmit antennas, convert the data signal into a plurality of data streams, and send the plurality of data streams. Correspondingly, the plurality of receive antennas at the receive end may receive corresponding data streams respectively. Therefore, a MIMO signal is a multi-stream signal.

2. MIMO radar

Radars obtain physical information (for example, range, velocity, and angle) of a target by transmitting sensing signals and receiving echo signals. The choice of sensing signal has a significant impact on radar performance. Common radar sensing signal indicators include correlation, anti-Doppler (Doppler) performance, an ambiguity function, and the like.

Most conventional radars transmit only a single sensing signal for sensing, while MIMO radars can transmit a plurality of sensing signals for sensing. The MIMO radar generally includes a plurality of transmit antennas and a plurality of receive antennas (alternatively, an antenna may be used for receiving and transmitting). The transmit antennas transmit different signal waveforms. Transmitted signals are reflected by a target and then received by the plurality of receive antennas, and are sent through a multi-channel receiver to signal processor for subsequent processing. The MIMO radar uses the plurality of transmit antennas to transmit waveforms, and performs joint processing on signals received by the plurality of receive antennas, to improve target detection performance. Based on spatial distribution locations of radar stations, the MIMO radars may be classified into two types. One type is a MIMO radar with antennas deployed in a central manner, that is, a central MIMO (C-MIMO) radar. The C-MIMO radar may also be referred to as a co-located MIMO radar, a monostatic MIMO radar, or the like. This is not limited. The other type is a MIMO radar with antennas deployed in a distributed manner, that is, a distributed MIMO (distributed MIMO, D-MIMO) radar. The D-MIMO radar may also be referred to as a separated MIMO radar. This is not limited.

An antenna of the C-MIMO radar is responsible for both receiving and sending functions, or receive and transmit antennas are separated but a spacing may be ignored. Angles between a sensing target and the receive and transmit antennas of the C-MIMO radar may be considered the same. The C-MIMO radar is a central radar that transmits different sensing signals by using different antennas or antenna groups. Compared with the conventional radar that sends a single sensing signal, the C-MIMO radar has an advantage such as a high angular resolution.

3. Doppler effect (Doppler effect)

The Doppler effect is a phenomenon that when relative motion occurs between a wave source and an observer, a frequency of a wave received by the observer is different from a frequency of a wave transmitted by the wave source. For example, when a radar transmits a pulse wave of a fixed frequency to scan a space, if a moving target is encountered, a frequency difference occurs between a frequency of an echo and the frequency of the transmitted wave, referred to as a Doppler shift. A relative radial moving velocity of the target to the radar may be measured based on magnitude of the Doppler shift, and a range of the target may be measured based on a time difference between the transmitted pulse and the received echo.

4. Ambiguity function

The ambiguity function is used to analyze impact of a delay and the Doppler effect on a radar echo signal. Specifically, an auto-ambiguity function of a radar sensing signal s(t) is

$$\text{AAF}_s(\tau, f) = \int_{-\infty}^{+\infty} s(t)s^*(t-\tau)e^{j2\pi ft}dt$$ . $\tau$ is a delay between sending the radar sensing signal and receiving a radar echo signal, f is a Doppler shift between the radar sensing signal and the radar echo signal, and $s^*(t - \tau)$ is a conjugate signal of the radar echo signal. Performance of a sensing receiver mainly depends on quality of the ambiguity function of the sensing signal, and the ambiguity function essentially refers to an output response when the signal (experiencing the delay $\tau$ and the Doppler shift f) received by the receiver passes through a match filter of the transmitted signal.

A cross-ambiguity function is an ambiguity function between two sensing signals, and may be understood as that $s^*(t - \tau)$ in the foregoing auto-ambiguity function is considered as another sensing signal.

5. Correlation function

An auto-correlation function is a degree of correlation between values of a random signal $x(t)$ at any different moments t1 and t2. The auto-correlation function is about cross-correlation in the signal, and represents a degree of correlation in a same sequence at different moments. It is a digital tool for finding a repetition pattern, such as finding a periodic signal covered by noise, or identifying a lost fundamental frequency. It is often used as an analytical function or sequence in signal processing, such as for time domain signals. A definition formula is R($t1$, $t2$) = $E(x(t1) * x(t2))$.

Main properties of the auto-correlation function are as follows:

(1) When t1=t2, the auto-correlation function has a maximum value and is equal to a mean square value of the signal.
(2) An auto-correlation function of a periodic signal is still a periodic signal of a same frequency.

For a cross-correlation function, auto-correlation is a special case of cross-correlation. The cross-correlation function is a degree of correlation between values of random signals $x(t)$ and $y(t)$ at any two different moments t1 and t2, and is defined as R(t1, t2) = E($x$(t1) * $y$(t2)).

The auto-correlation function and the cross-correlation function may be represented as a convolution (inner product) of two functions.

6. m-sequence

The m-sequence is a most basic pseudo-noise (pseudo-noise, PN) sequence used in a code division multiple access (code division multiple access, CDMA) system, short for a longest linear-feedback shift register sequence. In embodiments of this application, the m-sequence may also be referred to as (or represented as) an M-sequence, an m sequence, or an M sequence. This is not limited herein.

A feedback connection status of a linear-feedback shift register is described by using a polynomial $p(n)$:

$$p(x) = p_d x^d + p_{d-1} x^{d-1} + \cdots + p_1 x + p_0 = \sum_{y=0}^{d} p_y x^y.$$

$p(x)$ is referred to as a characteristic polynomial or a characteristic equation. A value of $p_y$ determines a feedback connection of the shift register. Because $p_0 = p_1 = 1$, $p(x)$ is a $d^{th}$-degree polynomial whose constant term is 1, and d is a quantity of stages of a shift register.

A necessary and sufficient condition for a d-stage linear-feedback shift register to generate an m-sequence is that a characteristic polynomial of the d-stage linear-feedback shift register is a $d^{th}$-degree primitive polynomial, that is, $p(x)$ is a $d^{th}$-degree primitive polynomial.

Specifically, if $p(x) = p_d x^d + p_{d-1} x^{d-1} + ... + p_1 x + p_0$ is a $d^{th}$-degree primitive polynomial over GF(**2**), any $d$ initial values that are not all 0 may generate an m-sequence by using a recursive formula corresponding to $p(x)$.

For example, if $p(x) = x^4 + x + 1$, a recursive relationship (recursive formula) of an output sequence is $a_k = a_{k-1} \oplus a_{k-4}$. k≥4, and $\oplus$ is an exclusive OR operation. If the initial values, namely, $a_0, a_1, a_2, a_3$, are 1,0,0,1, the output is 1,0,0,1,0,0,0,1,1,1,1,0,1,0,1,1,0,0,1,0,0,0,1,1,1,1,0,1,0,1..., whose period is $2^4$ - 1 = 15, that is, the m-sequence is 1,0,0,1,0,0,0,1,1,1,1,0,1,0,1, whose length is 15. If the initial values $a_0, a_1, a_2, a_3$ are 1,0,0,0, the output is 1,0,0,0,1,1,1,1,0,1,0,1,1,0,0,1,0,0,0,1,1,1,1,0,1,0,1..., whose period is $2^4$ - 1 = 15, that is, the m-sequence is 1,0,0,0,1,1,1,1,0,1,0,1,1,0,0, whose length is 15.

The m-sequence is modulated as follows: 1 in the m-sequence is changed to -1, and 0 in the m-sequence is changed to 1. For example, if the m-sequence is 1,0,0,1,0,0,0,1,1,1,1,0,1,0,1, a modulated m-sequence may be -1,1,1,-1,1,1,1,-1,-1,-1,-1,1,1,-1,1,-1.

The m-sequence has the following good properties:

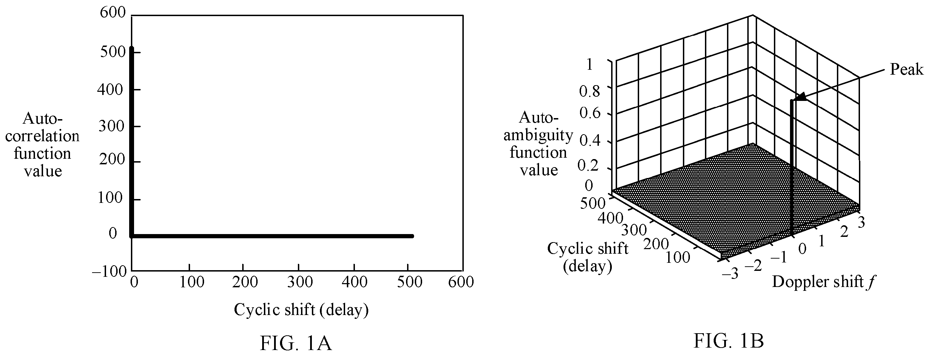

(1) A period of the m-sequence is $2^d$ - 1.
(2) An auto-correlation function of a modulated m-sequence is -1 in a case of a non-0 delay (lag), as shown in an image of an auto-correlation function of an m-sequence shown in FIG. 1A. The modulated m-sequence forms different sequences based on different cyclic shifts (or referred to as cyclic shift quantities), the auto-correlation function is a point multiplication (inner product) function of a modulated m-sequence whose cyclic shift is 0 and a modulated m-sequence whose cyclic shift is not 0, and the non-0 lag indicates that a cyclic shift is not 0.
(3) The modulated m-sequence is a constant modulus sequence, on which Fourier transform results in a perfect auto-correlation function.
(4) An ambiguity function of the modulated m-sequence is similar to a linear frequency modulation (linear frequency modulation, LFM) signal, and has anti-Doppler performance, as shown in an image of an ambiguity function of an m-sequence shown in FIG. 1B.
(5) A sequence (also referred to as a frequency-domain m-sequence) generated through discrete Fourier transform (discrete fourier transform, DFT) on the modulated m-sequence has a perfect auto-correlation function.

An existing C-MIMO radar sensing sequence is designed based on a loss function, which is specifically as follows:

If a radar transmits Q sequences (denoted as $\mathcal{S} = \{s_{q,p}\}_{1 \leq q \leq Q, 1 \leq p \leq P}$) whose lengths are P for sensing, different loss functions are first selected based on requirements, for example:

1. Optimize a sum of squares of a modulus length of a cross-correlation function and a modulus length of an auto-correlation function. A loss function is selected as follows:

$$L_{\mathcal{S}1} = \sum_{i=0}^{Z}\sum_{j=1}^{Q}\left|ACF_{s_j}(i)\right|^2 + \beta \cdot \sum_{i=0}^{Z}\sum_{j \neq g}\left|CCF_{s_j,s_g}(i)\right|^2.$$

$|ACF_{s_j}(i)|$ is the modulus length of the auto-correlation function, $|CCF_{s_j,s_g}(i)|$ is the modulus length of the cross-correlation function, $\beta$ is a weight coefficient for free selection, and Z is an integer within [0, P], and indicates that only a case in which a radar signal is within this delay is considered.

2. Optimize energy distribution (time-averaged) of a sensing signal in space. $E_{\mathcal{S}}(\theta)$ and $\mathfrak{E}_{\mathcal{S}}(\theta)$ are used to respectively represent actual power and expected power of the sensing signal at an angle $\theta$. Then, a loss function may be selected as follows:

$$L_{\mathcal{S}}^2 = \|E_{\mathcal{S}}(\theta) - \mathfrak{E}_{\mathcal{S}}(\theta)\|_*.$$

$\|\cdot\|_*$ represents a required norm, for example, an integral of an absolute value at the angle, or a maximum value within [0, $\pi$].

Then, based on the loss functions, a solution is obtained through iterative computation by using different optimization algorithms. Actually, the foregoing two loss functions correspond to a non-convex optimization problem, and therefore are difficult to resolve. For this, an existing method is first adding an appropriate constraint condition (for example, a reference signal is given, or a modulus length of a sensing signal is limited to unchanged) to convert the non-convex optimization problem into a convex optimization problem, and then obtaining a converged local optimal solution through iterative computation.

In integrated sensing and communication (integrated sensing and communication, ISAC), a sensing function of an access network device can help to improve precision and efficiency of communication. A function of a MIMO radar may be integrated into the access network device by leveraging a multi-antenna advantage of the access network device. However, for the foregoing C-MIMO radar sensing sequence, an orthogonal frequency division multiplexing (orthogonal frequency division multiplexing, OFDM) structure in a communication system is not considered in most cases. In addition, because an iterative algorithm is used, a computational amount is large, and a computational result greatly depends on selection of a parameter in a loss function or even an initial value of the iterative algorithm. Therefore, the C-MIMO radar sensing sequence is not applicable to the access network device for sensing. The foregoing m-sequence has poor cross-correlation and a small quantity of primitive polynomials, so that a quantity of generated sequences is also small. Therefore, the m-sequence is not applicable to the access network device for sensing, either. Therefore, how to implement the sensing function of the access network device becomes a problem to be resolved urgently.

In view of this, embodiments of this application provide a sensing method, to implement a sensing function of an access network device by designing a two-dimensional discrete m-sequence as a sensing sequence.

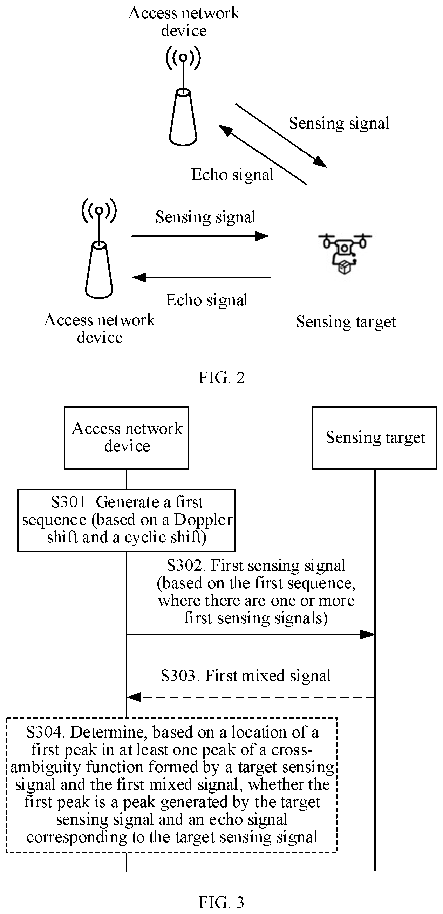

For example, FIG. 2 is a diagram of an architecture of a sensing communication system according to an embodiment of this application. As shown in FIG. 2, the sensing communication system includes an access network device and a sensing target (for example, an uncrewed aerial vehicle). For example, FIG. 2 shows two access network devices and one sensing target. During sensing, the access network device sends a sensing signal, receives a signal (referred to as an echo signal) obtained since the sensing target acts on the sensing signal, and obtains sensing information, for example, a location, a velocity, a size, or a shape of the sensing target, through computation based on the echo signal. The access network device may perform communication and sensing.

In embodiments of this application, the signal obtained since the sensing target acts on the sensing signal may also be referred to as a signal obtained since the sensing signal is reflected by the sensing target, a signal obtained since the sensing signal is refracted by the sensing target, a signal obtained since the sensing signal is diffracted by the sensing target, a signal obtained since the sensing signal is transmitted by the sensing target, a signal obtained since the sensing signal is scattered or dispersed by the sensing target, or the like. This is not specifically limited herein.

In embodiments of this application, a plurality of antennas are configured for each communication apparatus, for example, the access network device. The plurality of antennas may include at least one transmit antenna configured to send a signal and at least one receive antenna configured to receive a signal. In addition, each communication apparatus further additionally includes a transmitter chain and a receiver chain. A person of ordinary skill in the art may understand that the transmitter chain and the receiver chain may include a plurality of components (for example, a processor, a modulator, a multiplexer, a demodulator, a demultiplexer, or an antenna) related to signal sending and receiving. Therefore, communication apparatuses may communicate with each other by using a multi-antenna technology. Specifically, the communication apparatus has an antenna array, and an antenna array element in the antenna array may be used for sensing and communication. That is, each communication apparatus may simultaneously send a plurality of sensing signals and/or communication signals, and the antenna array of the communication apparatus has sensing and communication functions.

In embodiments of this application, the access network device may also be referred to as an access network (radio access network, RAN) node, a network device, a RAN entity, an access node, or the like, and is located on a network side of the foregoing sensing communication system. A device that is configured to help a terminal device implement wireless access and that has a wireless transceiver function may be disposed in a chip or a chip system of the device. The access network device includes but is not limited to a base station (base station), an evolved NodeB (evolved NodeB, eNodeB), an access point (access point, AP), a transmission reception point (transmission reception point, TRP), a next-generation NodeB (next-generation NodeB, gNB), a next-generation NodeB in a 6G mobile communication system, a base station in a future mobile communication system, an access node in a Wi-Fi system, or the like. The access network device may be a macro base station, a micro base station, an indoor station, a relay node, or a donor node, or a radio controller in an open radio access network (open radio access network, ORAN) or central radio access network (central radio access network, CRAN) scenario. Optionally, the RAN node may alternatively be a server, a wearable device, a vehicle, an in-vehicle device, or the like. For example, an access network device in a V2X technology may be a roadside unit (roadside unit, RSU). All or some functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or some functions of the access network device.

During sensing, the access network device may also be referred to as a sensing device, a sensing apparatus, a sensing communication apparatus, a sensing equipment, a sensing communication device, or the like. This is not limited herein.

In another possible scenario, a plurality of RAN nodes coordinate to assist a terminal device in implementing wireless access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be the access network device, or may be an apparatus that can support the access network device in implementing the function, for example, a chip system. The apparatus may be installed in the access network device or used in combination with the access network device.

The sensing target may be a passive target, such as a person, a mountain, a forest, or a building; or may be an active target, such as a vehicle, an uncrewed aerial vehicle, or a terminal device. Sensing scenarios may include positioning, ranging, imaging, and the like. In embodiments of this application, a form of the terminal device is not limited. An apparatus configured to implement a function of the terminal device may be the terminal device, or may be an apparatus that can support the terminal device in implementing the function, for example, a chip system. The apparatus may be installed in the terminal device or used in combination with the terminal device.

It should be understood that in embodiments of this application, quantities and types of communication apparatuses and sensing devices included in the sensing communication system are not limited. For example, the scenario shown in FIG. 2 may further include a terminal device, another access network device, and/or another sensing device, which is not shown in FIG. 2.

It should be noted that the solutions in embodiments of this application may also be applied to another communication system, and a corresponding name may be replaced with a name of a corresponding function in the another communication system.

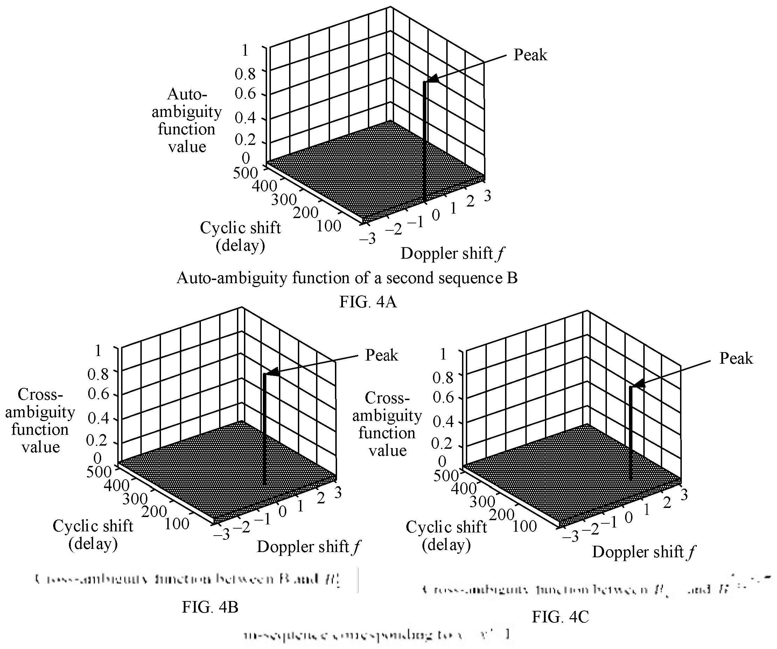

The following describes, in detail with reference to FIG. 3 and FIG. 4A to FIG. 4C, the sensing method provided in embodiments of this application. The sensing method is a method applicable between the access network device and the sensing target shown in FIG. 2. Alternatively, an action of the access network device in the method may be performed by an apparatus/module in the access network device, for example, a chip, a processor, or a processing unit in the access network device. This is not specifically limited in embodiments of this application.

As shown in FIG. 3, the sensing method includes the following steps.

S301. The access network device generates a first sequence.

S302. The access network device sends a first sensing signal. The first sensing signal is determined based on the first sequence.

The following separately describes S301 and S302. For the foregoing S301:

In this embodiment of this application, the first sequence is obtained by transforming a modulated m-sequence based on a cyclic shift and a Doppler shift. An m-sequence is a sequence that is generated based on a $d^{th}$-degree primitive polynomial and includes 0 and 1 and whose length is $L=2^d - 1$. The modulated m-sequence is a sequence that includes 1 and -1 and whose length is L. For related descriptions of the m-sequence, refer to the foregoing related descriptions of the m-sequence. L and d are positive integers.

The access network device may perform discrete Fourier transform (DFT) on the modulated m-sequence whose length is L to obtain a discrete frequency-domain sequence (referred to as a second sequence below) whose length is L, and transform the second sequence based on a selected cyclic shift and Doppler shift to obtain the first sequence. In other words, the first sequence is obtained by the access network device by transforming, by using the cyclic shift and the Doppler shift, the m-sequence (that is, the second sequence) experiencing modulation and DFT, and a length of the first sequence is also L.

In this embodiment of this application, an example in which the m-sequence is A = $[m_0, m_1, ... , m_{L-1}]$, the modulated m-sequence is $A' = [m'_0, m'_1, ... , m'_{L-1}]$, the second sequence is B = $[k_0, k_1, ... , k_{L-1}]$, the first sequence is $B_{p_u}^{\theta_v} = [B_{p_u}^{\theta_v}(0), B_{p_u}^{\theta_v}(1), ..., B_{p_u}^{\theta_v}(L-1)]$ is used for description. $p_u$ is the cyclic shift, $\theta_v$ is the Doppler shift, u is a first multiple, v is a second multiple, and $p_u$, u,

It should be understood that the foregoing sequence whose length is L is numbered from 0. Therefore, numbers of elements in the sequence are 0 to L-1. Alternatively, the sequence whose length is L may be numbered from 1, that is, the numbers of the elements in the sequence are 1 to L. This is not limited herein.

For example, a recursive formula corresponding to a $d^{th}$-degree primitive polynomial $p(x)$ corresponding to the m-sequence is $m_{k+4} = m_{k+1} \oplus m_k$. $k \geq 0$ and d=4, or $m_k = m_{k-3} \oplus m_{k-4}$ where $k \geq 4$ and initial values of $m_0, m_1, m_2, m_3$ are respectively given as 1,0,0,0. Therefore, the access network device may determine, based on the value of d, that the length of the m-sequence is $L=2^4 - 1=15$, may obtain $m_4 = m_1 \oplus m_0 = 1$, $m_5 = m_2 \oplus m_1 = 0$, $m_6 = m_3 \oplus m_2 = 0$, and the like through computation based on the recursive formula, and may obtain the m-sequence, that is, A=[1,0,0,0,1,0,0,1,1,0,1,0,1,1,1]. Further, the access network device modulates the m-sequence to obtain the modulated m-sequence, that is, $A'$= [-1,1,1,1,-1,1,1,-1,-1,1,-1,1,-1,-1,-1].

Then, the access network device may perform DFT on the modulated m-sequence $A'$= [-1,1,1,1,-1,1,1,-1,-1,1,-1,1,-1,-1,-1] to obtain the second sequence. The second sequence is B = [-1.0000 + 0$j$, -0.6617 - 3.9449$j$, -2.2091 - 3.3347$j$, 1.2361 - 3.8042$j$, -3.9563 - 0.5897$j$, 2.0000 + 3.4641$j$, -3.2361 - 2.3511$j$, -0.1729 - 3.9963$j$, -0.1729 + 3.9963$j$, -3.2361 + 2.3511$j$, 2.0000 - 3.4641$j$, -3.9563 + 0.5897$j$, 1.2361 + 3.8042$j$, -2.2091 + 3.3347$j$, -0.6617 + 3.9449j].

For the m-sequence constructed by using the $d^{th}$-degree primitive polynomial, a value range of the cyclic shift is [0, L = $2^d$ - 1), that is, the cyclic shift of the first sequence may be one of [0, $L$). In this embodiment of this application, the cyclic shift is related to a maximum delay. The maximum delay is a maximum delay from sending a sensing signal to receiving an echo signal within a sensing range, and the maximum delay may be set per chip. That is, the maximum delay is a maximum delay that can be generated by the access network device in a process from sending a sensing signal to receiving an echo signal within a maximum sensing range supported by the access network device. The access network device determines the cyclic shift of the first sequence based on the maximum delay. In this embodiment of this application, a delay feature is represented by using a cyclic shift, and different cyclic shifts correspond to different delays.

In a possible design scheme, the cyclic shift may meet the following relationship: $p_u = u * a$. $0 \leq p_u < L$, $p_u$ is the cyclic shift, $a$ is the maximum delay, $u$ is the first multiple, L is the length of the first sequence, and $p_u$, $a$, $u$ the first sequence is an integer multiple of the maximum delay. Because the length of the first sequence is L, two first sequences generated when the cyclic shift is 0 and L are the same. Therefore, a value range of the cyclic shift of the first sequence is [0, $L$) or (0, L]. Therefore, the access network device may determine different cyclic shifts by selecting different first multiples, to determine different first sequences.

The Doppler shift of the first sequence is related to a maximum Doppler shift, and the maximum Doppler shift is a maximum Doppler shift of an echo signal generated due to motion of a sensing target within the sensing range. That is, the maximum Doppler shift is a maximum Doppler shift, relative to a sensing signal, of an echo signal generated due to motion of a sensing target within the maximum sensing range supported by the access network device. The access network device determines the Doppler shift of the first sequence based on the maximum delay threshold.

In a possible design scheme, the Doppler shift may meet the following relationship: $\theta_v = v \, b$.

$$-\pi + \frac{b}{2} < \theta_v < \pi - \frac{b}{2}$$, $\theta_v$ is the Doppler shift, $\frac{b}{2}$ is the maximum Doppler shift, L × b is an integer multiple of $2\pi$, v is the second multiple, and v is a positive integer. In a process from sending a sensing signal to receiving an echo signal, the signal experiences changes in velocity directivity during transmission and reception, while the maximum Doppler shift is a Doppler shift in a single direction. Therefore, a maximum Doppler shift in transmission and reception directions is twice the maximum Doppler shift in the single direction. Therefore, $\theta_v = v * b$ may alternatively be represented as $\theta_v = 2v * \frac{b}{2}$.

That is, the Doppler shift of the first sequence is an integer multiple of twice the maximum Doppler shift. The access network device may determine different Doppler shifts by selecting different second multiple, to determine different first sequences.

It should be understood that, in this embodiment of this application, "*" and "×" may be replaced with each other, and both represent a meaning of multiplication.

After determining values of the cyclic shift and the Doppler shift, the access network device may transform the second sequence based on the determined cyclic shift and Doppler shift, to generate the first sequence.

In a possible design scheme, an $n^{th}$ element in the first sequence may meet the following relationship:

$$B_{p_u}^{\theta_v}(n) = k_{(n+p_u)mod(L)} * e^{jn\theta_v}$$

. $0 \le n \le L - 1$. $k_{(n+p_u)}mod(L)$ is one of $B = [k_0, k_1, \dots, k_{L-1}]$, $B$ is the second sequence, n is a number of an element in the first sequence, and n is a positive integer.

That is, when the Doppler shift $\theta_v$ and the cyclic shift $p_u$ are determined, the $n^{th}$ element in the first sequence is a product of a value of an element in the second sequence and $e^{jn\theta_v}$, and a sequence number of the element in the second sequence and corresponding to the $n^{th}$ element is a remainder obtained by dividing a sum of the element number of the first sequence and the cyclic shift by the length of the first sequence, that is, $(n + p_u)mod(L)$.

For example, if d=4, L=15, the cyclic shift is $p_u$=2, and the Doppler shift is $\theta_v = \frac{2\pi}{15}$,

$$B_2^{\frac{2\pi}{15}}(0) = k_{(0+2)mod(15)} * e^{j \times 0 \times \frac{2\pi}{15}} = k_2 \ , \quad B_2^{\frac{2\pi}{15}}(1) = k_{(1+2)mod(15)} * e^{j \times 1 \times \frac{2\pi}{15}} = k_3 e^{j\frac{2\pi}{15}} \ , \dots, \text{ and }$$

$$B_2^{\frac{2\pi}{15}}(14) = k_{(14+2)mod(15)} * e^{j \times 14 \times \frac{2\pi}{15}} = k_1 e^{j\frac{28\pi}{15}} \quad . \quad \text{Then, a first sequence}$$

$$B_2^{\frac{2\pi}{15}} = [B_2^{\frac{2\pi}{15}}(0), B_2^{\frac{2\pi}{15}}(1), \dots, B_2^{\frac{2\pi}{15}}(L-1)] \text{ is obtained.}$$

In this embodiment of this application, the first sequence may be considered as a two-dimensional discrete m-sequence formed based on the cyclic shift and the Doppler shift, and different cyclic shifts and/or Doppler shifts form different first sequences. The first sequence has the following characteristics:

Characteristic 1: The m-sequence corresponds to the $d^{th}$-degree primitive polynomial, the length of the first sequence is $2^d$ - 1, and the first sequence has $(2^d - 1)^2$ values. Because a cyclic shift of a first sequence has $2^d$ - 1 possible values, and each cyclic shift corresponds to $2^d$ - 1 Doppler shifts, an m-sequence corresponding to a $d^{th}$-degree primitive polynomial may form $(2^d - 1)^2$ two-dimensional discrete m-sequences. In other words, the first sequence has $(2^d - 1)^2$ values, that is, the first sequence may be any one of $(2^d - 1)^2$ different two-dimensional m-sequences. Therefore, it can be learned that the first sequence has much more possible values than the m-sequence. This increases a sequence capacity.

Characteristic 2: An auto-ambiguity function of the first sequence has a unique peak. That is, an auto-ambiguity function of the first sensing signal has a unique peak. In addition, the peak of the auto-ambiguity function of the first sequence (or the first sensing signal) is within a range $[0, a] \times [-\frac{b}{2} + \theta_v, \frac{b}{2} + \theta_v]$ on a delay-Doppler shift plane, $a$ is the maximum delay, $\frac{b}{2}$ is the maximum Doppler shift, and $\theta_v$ is the Doppler shift.

It should be noted that, in this embodiment of this application, an auto-ambiguity function of a sequence is an auto-ambiguity function of a sensing signal formed by the sequence, and a cross-ambiguity function between two sequences is a cross-ambiguity function between sensing signals respectively formed by the two sequences. In addition, because the delay in this embodiment of this application is represented by using a cyclic shift, the delay-Doppler shift plane may be replaced with a cyclic shift-Doppler shift plane.

As shown in FIG. 4A showing an image of an auto-ambiguity function of a second sequence B generated by a $9^{th}$-degree primitive polynomial $p(x) = x^9 + x^4 + 1$ corresponding to the m-sequence, the auto-ambiguity function of the second sequence B has a unique peak, and the peak is at (0,0) on the delay-Doppler shift plane. As the auto-ambiguity function of the first sequence also has a unique peak, the peak characteristic shows good anti-Doppler performance.

When the access network device performs MIMO sensing, the access network device sends a plurality of first sensing signals. The plurality of first sensing signals may be generated by using a plurality of first sequences with a same Doppler shift but different cyclic shifts. If the access network device needs to identify an echo signal corresponding to any sensing signal (used as a target sensing signal, whose corresponding first sequence is a target sequence) in the plurality of sent first sensing signals, because a signal received by the access network device is a mixed signal, that is, in addition to the echo signal corresponding to the target sensing signal, the mixed signal may further include a first sensing signal sent by another access network device or an echo signal corresponding to the first sensing signal, an echo signal corresponding to another first sensing signal sent by the access network device, and the like, the access network device may compute a cross-ambiguity function between the mixed signal and the target sensing signal, and determine, based on the characteristic 2 in one or more peaks generated by the cross-ambiguity function, a peak generated by the target sensing signal and the echo signal corresponding to the target sensing signal, to determine information about a sensing target sensed by using the target sensing signal. For a specific implementation process, refer to related descriptions in the following S303 and S304. Details are not described herein.

Characteristic 3: A cross-ambiguity function between the first sequence and the second sequence is obtained by translating an auto-ambiguity function of the second sequence on the delay-Doppler shift plane based on the cyclic shift and the Doppler shift of the first sequence. That is, in this embodiment of this application, the cross-ambiguity function generated by the first sequence and the second sequence is also a function having a unique peak, and a location of the peak may be obtained by translating the auto-ambiguity function of the second sequence.

As shown in FIG. 4B, the first sequence and the second sequence are generated by using the $9^{th}$-degree primitive polynomial $p(x) = x^9 + x^4 + 1$, and the first sequence is $B_{100}^0$, that is, $p_u = 100$ and $\theta_v = 0$. In this case, a peak of a cross-ambiguity function between the first sequence $B_{100}^0$ and the second sequence B is at (100, 0) on the delay-Doppler shift plane.

Characteristic 4: A cross-ambiguity function between two first sequences different in at least one of the Doppler shift and the cyclic shift is obtained by translating the auto-ambiguity function of the second sequence on a delay-Doppler shift plane based on at least one of a difference between cyclic shifts and a difference between Doppler shifts of the two first sequences. That is, a cross-ambiguity function between two first sequences with different cyclic shifts is obtained by translating the auto-ambiguity function of the second sequence on the delay-Doppler shift plane based on a difference between the cyclic shifts of the two first sequences. A cross-ambiguity function between two first sequences with different Doppler shifts is obtained by translating the auto-ambiguity function of the second sequence on the delay-Doppler shift plane based on a difference between the Doppler shifts of the two first sequences. A cross-ambiguity function between two first sequences with different cyclic shifts and different Doppler shifts is obtained by translating the auto-ambiguity function of the second sequence on the delay-Doppler shift plane based on a difference between the cyclic shifts and a difference between the Doppler shifts of the two first sequences.

For example, there are two first sequences with different cyclic shifts and different Doppler shifts, for example, a sequence #1 and a sequence #2, the sequence #1 is $B_{p_{u\#1}}^{\theta_{v\#1}}$, and the sequence #2 is $B_{p_{u\#2}}^{\theta_{v\#2}}$. In this case, a cross-ambiguity function between $B_{p_{u\#1}}^{\theta_{v\#1}}$ and $B_{p_{u\#2}}^{\theta_{v\#2}}$ is obtained by translating, on the delay-Doppler shift plane based on a vector $(p_{u\#1} - p_{u\#2}, \theta_{v\#1} - \theta_{v\#2})$, the auto-ambiguity function of the second sequence B that forms the sequence #1 and the sequence #2. As shown in FIG. 4C, the sequence #1 is $B_{100}^0$, that is, $p_{u\#1} = 100$ and $\theta_{v\#1} = 0$, and the sequence #2 is $B_0^{\frac{100}{511} \times 2\pi}$, that is, $p_{u\#2} = 0$ and $\theta_{v\#2} = \frac{100}{511} \times 2\pi$. The sequences are generated by using the $9^{th}$-degree primitive polynomial $p(x) = x^9 + x^4 + 1$, and a peak of a cross-correlation function between $B_{100}^0$ and $B_0^{\frac{100}{511} \times 2\pi}$ is at (100, $\frac{100}{511} \times 2\pi$) on the delay-Doppler shift plane.

Characteristic 5: A peak of a cross-ambiguity function of a third sequence relative to a fourth sequence is on a delay plane outside [0, a], and the third sequence and the fourth sequence are first sequences with a same Doppler shift but different cyclic shifts. In this characteristic 5, the cross-ambiguity function of the third sequence relative to the fourth sequence means that the third sequence serves as a target sequence and the fourth sequence serves as an interfering sequence for cross-ambiguity computation. It should be understood that, a peak of a cross-ambiguity function of the fourth sequence relative to the third sequence is also on the delay plane outside [0, a]. In this case, the third sequence serves as a target sequence and the fourth sequence serves as an interfering sequence for cross-ambiguity computation.

That is, a peak of a cross-ambiguity function between two first sequences with a same Doppler shift but different cyclic shifts are on the delay plane outside [0, a]. Because all values of cyclic shifts of different first sequences are integer multiples of $a$, a peak of a cross-ambiguity function between two first sequence with a same Doppler shift but different cyclic shifts is usually on the delay plane outside [0, $a$].

When a same access network device sends a plurality of first sensing signals (including a target sensing signal), the plurality of first sensing signals may be generated by using first sequences (including a target sequence for generating the target sensing signal) with a same Doppler shift but different cyclic shifts. The access network device may compute a cross-ambiguity function between a mixed signal and the target sensing signal. In this case, the cross-ambiguity function has one or more peaks, and a location of the peak is identified based on the characteristic 5. For a peak on the delay plane outside [0, $a$], it is determined that the peak is not generated by a signal (that is, an echo signal corresponding to the target sensing signal) obtained since a sensing target acts on the sensing signal, so that a peak generated by an echo signal corresponding to another sensing signal sent by the access network device can be filtered out, a peak generated by the echo signal corresponding to the target sensing signal is retained, and sensing information is computed based on the peak, to implement target sensing. For a specific implementation process, refer to related descriptions in the following S303 and S304. Details are not described herein.

Characteristic 6: A peak of a cross-ambiguity function of a fifth sequence relative to a sixth sequence is on a Doppler shift plane outside $\left[-\frac{b}{2}+\theta_{v1},\frac{b}{2}+\theta_{v1}\right]$, the fifth sequence and the sixth sequence are first sequences with different Doppler shifts, and $\theta_{v1}$ is a Doppler shift of the fifth sequence. That is, when the fifth sequence serves as a target sequence, a peak of a cross-ambiguity function generated by interference of another first sequence (for example, the sixth sequence) with a different Doppler shift from the fifth sequence to the fifth sequence is on the Doppler shift plane outside $\left[-\frac{b}{2}+\theta_{v1},\frac{b}{2}+\theta_{v1}\right]$. Similar to the characteristic 5, because all values of Doppler shifts of different first sequences are integer multiples of b, the peak of the cross-ambiguity function of the fifth sequence relative to the sixth sequence is usually on the Doppler shift plane outside $\left[-\frac{b}{2}+\theta_{v1},\frac{b}{2}+\theta_{v1}\right]$.

It should be understood that, a peak of a cross-ambiguity function of the sixth sequence relative to the fifth sequence is on a Doppler shift plane outside $\left[-\frac{b}{2}+\theta_{v3},\frac{b}{2}+\theta_{v3}\right]$. $\theta_{v3}$ is a Doppler shift of the sixth sequence. That is, the sixth sequence serves as a target sequence, and the fifth sequence serves as an interfering sequence.

In a scenario in which a plurality of access network devices perform sensing within a sensing range, different access network devices may generate different first sensing signals by using first sequences with different Doppler shifts. For example, an access network device 1 generates first sequences (including the fifth sequence) with different cyclic shifts by using the Doppler shift $\theta_{v1}$, and an access network device 2 generates first sequences (including the sixth sequence) with different cyclic shifts by using the Doppler shift $\theta_{v2}$. When the fifth sequence serves as a target sequence of the access network device 1, the access network device 1 may compute a cross-ambiguity function between a first sensing signal (used as a target sensing signal) generated by using the fifth sequence and a received mixed signal. In this case, the cross-ambiguity function has one or more peaks, and a location of the peak is identified based on the characteristic 6. For a peak on the Doppler shift plane outside $\left[-\frac{b}{2}+\theta_{v1},\frac{b}{2}+\theta_{v1}\right]$, it is determined that the peak is not generated by a signal (that is, an echo signal corresponding to the target sensing signal) obtained since a sensing target acts on the first sensing signal generated by using the fifth sequence, so that a peak generated by an echo signal corresponding to a first sensing signal sent by the access network device 2 may be filtered out, a peak generated by the echo signal corresponding to the target sensing signal is retained, and sensing information is computed based on the peak, to implement target sensing. For a specific implementation process, refer to related descriptions in the following S303 and S304. Details are not described herein.

That is, based on the foregoing characteristic 5 and characteristic 6, the access network device may filter out, from one or more peaks of a cross-ambiguity function between a target sensing signal and a received mixed signal, a peak generated by a signal that is not the echo signal corresponding to the target sensing signal. It may be understood that the access network device may filter out, from the received mixed signal, the signal that is not the echo signal corresponding to the target sensing signal.

For the foregoing S302:

When the access network device performs MIMO sensing, and there is only one access network device within the sensing range, the access network device may generate different first sequences based on different Doppler shifts and cyclic shifts, perform processing such as mapping or modulation on the generated different first sequences to form different first sensing signals, and send the different first sensing signals for target sensing.

In a scenario in which there are a plurality of access network devices within the sensing range, each access network device may generate first sequences with different cyclic shifts by using a fixed Doppler shift, to send a plurality of first sensing signals. Different access network devices have different fixed Doppler shifts. That is, different access network devices generate different first sensing signals by using different first sequences with different Doppler shifts and a same cyclic shift or different cyclic shifts. For first sequences with different cyclic shifts, sensing signals are sent to different directions through beamforming (beamforming) at different antenna layers, to implement target sensing in the different directions. In other words, different cyclic shifts correspond to different beam sending directions. It should be understood that, for a sensing signal in a sending direction without a sensing target, no corresponding echo signal cannot be generated.

In this embodiment of this application, a Doppler shift of a first sequence used by each access network device for sensing may be preconfigured, or may be determined through negotiation with another access network device, or may be configured by a control node (for example, a management server or an anchor access network device).

For example, a Doppler shift of first sequences used by an access network device 1 is $\theta_{v1}$, which generates three first sequences $B_{p_{u1}}^{\theta_{v1}}$, $B_{p_{u2}}^{\theta_{v1}}$, and $B_{p_{u3}}^{\theta_{v1}}$ whose cyclic shifts are $p_{u1}$, $p_{u2}$, and $p_{u3}$ respectively, and generates and sends a sensing signal 1, a sensing signal 2, and a sensing signal 3. A Doppler shift of first sequences used by an access network device 2 is $\theta_{v2}$, which generates three first sequences $B_{p_{u4}}^{\theta_{v2}}$, $B_{p_{u5}}^{\theta_{v2}}$, and $B_{p_{u6}}^{\theta_{v2}}$ whose cyclic shifts are $p_{u4}$, $p_{u5}$, and $p_{u6}$ respectively, and generates and sends a sensing signal 4, a sensing signal 5, and a sensing signal 6. $p_{u1}$, $p_{u2}$, and $p_{u3}$ may be the same as or different from $p_{u4}$, $p_{u5}$, and $p_{u6}$. This is not limited herein. It should be understood that different targets may be sensed by using different sensing signals.

In the foregoing scenario, the access network device generates a plurality of first sequences. Because the plurality of first sequences have a same Doppler shift but different cyclic shifts, generated first sensing signals are also different. If the access network device needs to identify, from a received mixed signal, a signal (that is, an echo signal corresponding to a target sensing signal) obtained since a sensing target acts on a sent first sensing signal (referred to as the target sensing signal, whose corresponding first sequence is referred to as a target sequence), because the signal received by the access network device is a mixed signal, and the mixed signal may include an echo signal corresponding to another first sensing signal sent by the access network device, a first sensing signal sent by another access network device or an echo signal corresponding to the first sensing signal, or the like, the access network device needs to perform matched filtering processing (for example, by a match filter) on the mixed signal, to filter or screen out a signal that is not the echo signal corresponding to the target sensing signal, and retain the echo signal corresponding to the first sensing signal, to complete sensing for the sensing target and obtain information about the sensing target, for example, information such as a size, a location, and a shape of the sensing target. Therefore, further, the sensing method provided in this embodiment of this application may further include the following steps:

S303. The access network device receives a first mixed signal.

For related descriptions of the first mixed signal, refer to related descriptions in the foregoing S302. Details are not described herein again.

S304. The access network device determines, based on a location of a first peak in at least one peak of a cross-ambiguity function formed by a target sensing signal and the first mixed signal, whether the first peak is a peak generated by the target sensing signal and an echo signal corresponding to the target sensing signal.

The target sensing signal is generated based on a target sequence, the target sequence is one of a plurality of first sequences that are generated by the access network device and that have a same Doppler shift but different cyclic shifts, and the first peak is any one of the at least one peak.

After receiving the first mixed signal, the access network device computes a cross-ambiguity function of the target sensing signal relative to the first mixed signal. Because the first mixed signal may include different first sensing signals generated by different first sequences and corresponding echo signals, the cross-ambiguity function obtained through computation may have one or more peaks, and the access network device may determine a location of each peak on the delay-Doppler shift plane.

For example, the target sequence is a sequence 1 and forms a sensing signal 1, the access network device further sends a sensing signal 2 formed by a sequence 2 with a same Doppler shift as but a different cyclic shift from the sequence 1, and there is a sensing signal 3 sent by another access network device based on a sequence 3 with a different Doppler shift from the sequence 1 and the sequence 2. The first mixed signal may include an echo signal corresponding to the sensing signal 1, an echo signal corresponding to the sensing signal 2, and the sensing signal 3 or an echo signal corresponding to the sensing signal 3. In this case, there may be three peaks in a cross-ambiguity function formed by the first mixed signal and the target sensing signal, including a peak generated by the echo signal corresponding to the sensing signal 1 and the sensing signal 1, a peak generated by the echo signal corresponding to the sensing signal 2 and the sensing signal 1, and a peak generated by the echo signal corresponding to the sensing signal 3 and the sensing signal 1. Therefore, the access network device may determine locations of the three peaks on the delay-Doppler shift plane.

When the first peak is on the delay plane outside [0, *a*], the access network device may determine that the first peak is not the peak generated by the target sensing signal and the echo signal corresponding to the target sensing signal. *a* is the maximum delay. That is, the access network device may filter out, from the first mixed signal based on the foregoing characteristic 5, a peak generated to the target sensing signal due to an echo signal corresponding to another sensing signal sent by the access network device.

When the first peak is on the Doppler shift plane outside $[-\frac{b}{2} + \theta_{v2}, \frac{b}{2} + \theta_{v2}]$, the access network device may determine that the first peak is not the peak generated by the target sensing signal and the echo signal corresponding to the target sensing signal. $\frac{b}{2}$ is the maximum Doppler shift, and $\theta_{v2}$ is a Doppler shift of the target sequence. That is, the access network device may filter out, from the first mixed signal based on the foregoing characteristic 6, a peak generated to the target sensing signal due to a sensing signal sent by another access network device.

For a first peak that meets either of the foregoing two cases, the access network device may determine that the first peak is not the peak generated by the target sensing signal and the echo signal corresponding to the target sensing signal.

In a possible case, in a scenario in which only one access network device performs sensing within the sensing range, when determining that the first peak is on a delay plane within [0, *a*], the access network device may determine that the first peak is the peak generated by the target sensing signal and the echo signal corresponding to the target sensing signal.

In a scenario in which a plurality of access network devices perform sensing, when determining that the first peak is on the delay plane within [0, *a*], the access network device further needs to determine whether the first peak is generated by a sensing signal sent by another access network device, that is, the access network device needs to determine whether the first peak is on a Doppler shift plane within $[-\frac{b}{2} + \theta_{v2}, \frac{b}{2} + \theta_{v2}]$. If the first peak is on the Doppler shift plane within $[-\frac{b}{2} + \theta_{v2}, \frac{b}{2} + \theta_{v2}]$, the access network device may determine that the first peak is the peak generated by the target sensing signal and the echo signal corresponding to the target sensing signal. If the first peak is on the Doppler shift plane outside $[-\frac{b}{2} + \theta_{v2}, \frac{b}{2} + \theta_{v2}]$, the access network device may determine that the first peak is not the peak generated by the target sensing signal and the echo signal corresponding to the target sensing signal.

That is, when the first peak is on both the delay plane within [0, *a*] and the Doppler shift plane within $[-\frac{b}{2} + \theta_{v2}, \frac{b}{2} + \theta_{v2}]$, that is, when the first peak is on a delay-Doppler shift plane within $[0, a] \times [-\frac{b}{2} + \theta_{v2}, \frac{b}{2} + \theta_{v2}]$, the access network device may determine that the first peak is the peak generated by the target sensing signal and the echo signal corresponding to the target sensing signal. *a* is the maximum delay, $\frac{b}{2}$ is the maximum Doppler shift, and $\theta_{v2}$ is the Doppler shift of the target sequence.

In other words, when the first peak is on a delay-Doppler shift plane outside $[0, a] \times [-\frac{b}{2} + \theta_{v2}, \frac{b}{2} + \theta_{v2}]$, the access network device may determine that the first peak is not the peak generated by the target sensing signal and the echo signal corresponding to the target sensing signal. It may be understood that the first peak is a peak of a cross-ambiguity function between the target sensing signal and the echo signal corresponding to the target sensing signal, or the first peak is a peak of an auto-ambiguity function of the target sensing signal.

The foregoing example is still used. There are three peaks in the cross-ambiguity function formed by the target sensing signal and the first mixed signal: a peak 1 to a peak 3, the peak 1 and the peak 3 are both on the delay-Doppler shift plane outside $[0, a] \times [-\frac{b}{2} + \theta_{v2}, \frac{b}{2} + \theta_{v2}]$, and the peak 2 is on the delay-Doppler shift plane inside $[0, a] \times [-\frac{b}{2} + \theta_{v2}, \frac{b}{2} + \theta_{v2}]$. Therefore, the access network device may determine that the peak 2 is the peak generated by the echo signal corresponding to the target sensing signal.

Further, the access network device may determine a range of a sensing target relative to the access network device based on a delay of the determined peak, determine a moving velocity of the sensing target relative to the access network device based on a Doppler shift of the peak, and obtain an angle range of the sensing target relative to the access network device based on a sending direction of the target sensing signal.

Based on the sensing method shown in FIG. 3, the access network device transforms an m-sequence based on a Doppler shift and a cyclic shift to obtain a two-dimensional discrete m-sequence, that is, the first sequence. The first sequence has a good auto-correlation function characteristic, a good ambiguity function characteristic, and the like, so that a sensing signal is formed based on the first sequence to implement target sensing. In addition, during MIMO sensing, by setting different Doppler shifts and cyclic shifts of first sequences, the access network device may distinguish between echo signals of a plurality of sensing signals transmitted by the access network device, as well as an echo signal corresponding to a sensing signal sent by another access network device.

It may be understood that, in the foregoing embodiments, methods and/or steps implemented by the access network device may alternatively be implemented by a component (for example, a processor, a chip, a chip system, a circuit, a logical module, or software) that may be used in the access network device.

The foregoing mainly describes the solutions provided in this application. Correspondingly, this application further provides a communication apparatus. The communication apparatus is configured to implement the methods in the foregoing method embodiments. The communication apparatus may be the access network device in the foregoing method embodiments, or an apparatus including the access network device, or a component that may be used in the access network device, for example, a chip or a chip system.

It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, module division in embodiments of this application is an example, and is merely logical function division. There may be another division manner during actual implementation.

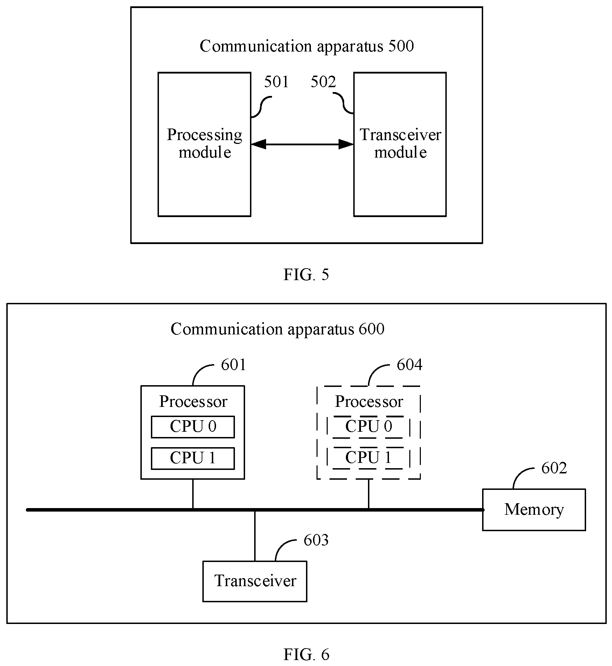

For example, the communication apparatus is the access network device in the foregoing method embodiments. FIG. 5 is a diagram of a structure of a communication apparatus according to an embodiment of this application. As shown in FIG. 5, the communication apparatus 500 includes a processing module 501 and a transceiver module 502. The processing module 501 is configured to perform a processing function of the access network device in the foregoing method embodiments. The transceiver module 502 is configured to perform receiving and sending functions of the access network device in the foregoing method embodiments.

All related content of steps in the foregoing method embodiments may be cited in function descriptions of corresponding functional modules. Details are not described herein again.

Because the communication apparatus 500 provided in this embodiment may perform the foregoing sensing method, for technical effects that can be achieved by the communication apparatus, refer to the foregoing method embodiments. Details are not described herein again.

In a possible design scheme, in this embodiment of this application, the transceiver module 502 may include a receiving module and a sending module (not shown in FIG. 5). The transceiver module is configured to implement a sending function and a receiving function of the communication apparatus 500.

In a possible design scheme, the communication apparatus 500 may further include a storage module (not shown in FIG. 5), and the storage module stores a program or instructions. When the processing module 501 executes the program or the instructions, the communication apparatus 500 is enabled to perform functions of the access network device in the method shown in FIG. 3.

It should be understood that the processing module 501 in the communication apparatus 500 may be implemented by a processor or a processor-related circuit component, and may be a processor or a processing unit; and the transceiver module 502 may be implemented by a transceiver or a transceiver-related circuit component, and may be a transceiver or a transceiver unit.

For example, FIG. 6 is a diagram of a structure of another communication apparatus according to an embodiment of this application. The communication apparatus may be an access network device, or may be a chip (system) or another component or element that may be disposed in the access network device. As shown in FIG. 6, the communication apparatus 600 may include a processor 601. In a possible design scheme, the communication apparatus 600 may further include a memory 602 and/or a transceiver 603. The processor 601 is coupled to the memory 602 and the transceiver 603, for example, through a communication bus.

The following describes the components of the communication apparatus 600 in detail with reference to FIG. 6.

The processor 601 is a control center of the communication apparatus 600, which may be one processor, or may be a collective term of a plurality of processing elements. For example, the processor 601 is one or more central processing units (central processing unit, CPU) or an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

In a possible design scheme, the processor 601 may perform various functions of the communication apparatus 600 by running or executing a software program stored in the memory 602 and invoking data stored in the memory 602.

During specific implementation, in an embodiment, the processor 601 may include one or more CPUs, for example, a CPU 0 and a CPU 1 shown in FIG. 6.

During specific implementation, in an embodiment, the communication apparatus 600 may alternatively include a plurality of processors, for example, the processor 601 and a processor 604 shown in FIG. 6. Each of the processors may be a single-core processor (single-CPU), or may be a multi-core processor (multi-CPU). The processor herein may be one or more devices, circuits, and/or processing cores configured to process data (for example, computer program instructions).

The memory 602 is configured to store the software program for performing the solutions of this application, and the processor 601 controls execution of the software program. For a specific implementation, refer to the foregoing method embodiments. Details are not described herein again.

In a possible design scheme, the memory 602 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be used to carry or store expected program code in an instruction or data structure form and that can be accessed by a computer. The memory 602 may be integrated with the processor 601, or may exist independently, and is coupled to the processor 601 through an interface circuit (not shown in FIG. 6) of the communication apparatus 600. This is not specifically limited in this embodiment of this application.

The transceiver 603 is configured to communicate with another communication apparatus. For example, the communication apparatus 600 is a terminal device, and the transceiver 603 may be configured to communicate with a network device or another terminal device. For another example, the communication apparatus 600 is a network device, and the transceiver 603 may be configured to communicate with a terminal device or another network device.

In a possible design scheme, the transceiver 603 may include a receiver and a transmitter (not separately shown in FIG. 6). The receiver is configured to implement a receiving function, and the transmitter is configured to implement a sending function.

In a possible design scheme, the transceiver 603 may be integrated with the processor 601, or may exist independently, and is coupled to the processor 601 through an interface circuit (not shown in FIG. 6) of the communication apparatus 600. This is not specifically limited in this embodiment of this application.

It should be noted that the structure of the communication apparatus 600 shown in FIG. 6 does not constitute a limitation on the communication apparatus. The communication apparatus may actually include more or fewer components than those shown in the figure, or combine some components, or have a different component arrangement.

In addition, for technical effects of the communication apparatus 600, refer to the technical effects of the methods in the foregoing method embodiments. Details are not described herein again.

An embodiment of this application further provides a computer-readable storage medium. The computer-readable storage medium stores a computer program or instructions. When the computer program or the instructions are executed by a computer, functions in the foregoing method embodiments are implemented.

An embodiment of this application further provides a computer program product. When the computer program product is executed by a computer, functions in the foregoing method embodiments are implemented.

The foregoing embodiments may be all or partly implemented by using software, hardware, firmware, or any combination thereof. When a software program is used for implementation, the embodiments may be all or partly implemented in a form of a computer program product. The computer program product includes one or more computer instructions. When the computer program instructions are loaded and executed on a computer, procedures or functions according to embodiments of this application are all or partly generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art may be aware that, in combination with units and algorithm steps in examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some steps of the methods described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

Although this application is described herein with reference to embodiments, in a process of implementing this application that claims protection, a person skilled in the art may understand and implement other variations of the disclosed embodiments by viewing the accompanying drawings, disclosed content, and the accompanying claims. In the claims, "comprising" (comprising) does not exclude another component or step, and "a" or "an" does not exclude a plural case. A single processor or another unit may implement several functions enumerated in the claims. Some measures are recorded in dependent claims that are different from each other, but this does not mean that these measures cannot be combined to produce a better effect.

**Claims**

1. A sensing method, wherein the method comprises:

   generating a first sequence, wherein the first sequence is obtained by transforming an m-sequence based on a cyclic shift and a Doppler shift; and
   sending a first sensing signal, wherein the first sensing signal is determined based on the first sequence.

**2.** The method according to claim 1, wherein that the first sequence is obtained by transforming the m-sequence based on the cyclic shift and the Doppler shift comprises:
the first sequence is obtained by transforming a second sequence based on the cyclic shift and the Doppler shift, and the second sequence is obtained by performing discrete Fourier transform on the m-sequence.

**3.** The method according to claim 2, wherein a cross-ambiguity function between two first sequences different in at least one of the Doppler shift and the cyclic shift is obtained by translating an auto-ambiguity function of the second sequence on a delay-Doppler shift plane based on at least one of a difference between cyclic shifts and a difference between Doppler shifts of the two first sequences.

**4.** The method according to any one of claims 1 to 3, wherein the m-sequence corresponds to a $d^{th}$-degree primitive polynomial, the first sequence has $(2^d - 1)^2$ values, a length of the first sequence is $2^d - 1$, and d is a positive integer.

**5.** The method according to any one of claims 1 to 4, wherein the cyclic shift is related to a maximum delay, the maximum delay is a maximum delay from sending a sensing signal to receiving an echo signal within a sensing range, the Doppler shift is related to a maximum Doppler shift, and the maximum Doppler shift is a maximum Doppler shift of an echo signal generated due to motion of a sensing target within the sensing range.

**6.** The method according to claim 5, wherein the cyclic shift meets the following relationship: $p_u = u * a$, wherein $p_u < L$, $p_u$ is the cyclic shift, $a$ is the maximum delay, $u$ is a first multiple, L is the length of the first sequence, and $p_u$, $a$, $u$, and L are positive integers.

**7.** The method according to claim 5 or 6, wherein the Doppler shift meets the following relationship: $\theta_v = v * b$, wherein $-\pi + \frac{b}{2} \leq \theta_v \leq \pi - \frac{b}{2}$, $\theta_v$ is the Doppler shift, $\frac{b}{2}$ is the maximum Doppler shift, $L \times b$ is an integer multiple of $2\pi$, $v$ is a second multiple, L is the length of the first sequence, and v is a positive integer.

**8.** The method according to any one of claims 5 to 7, wherein an $n^{th}$ element in the first sequence meets the following relationship: $B_{p_u}^{\theta_v}(n) = k_{(n+p_u)mod(L)} * e^{jn\theta_v}$, wherein $0 \leq n \leq L - 1$, $k_{(n+pu)}mod(L)$ is one of $B = [k_0, k_1, ..., k_{L-1}]$, n is a number of an element in the first sequence, $\theta_v$ is the Doppler shift, $p_u$ is the cyclic shift, L is the length of the first sequence, B is the second sequence obtained by performing discrete Fourier transform on the m-sequence, and n and L are positive integers.

**9.** The method according to any one of claims 5 to 8, wherein an auto-ambiguity function of the first sequence has a unique peak.

**10.** The method according to claim 9, wherein the peak is within a range $[0, a] \times [-\frac{b}{2} + \theta_v, \frac{b}{2} + \theta_v]$ on the delay-Doppler shift plane, $a$ is the maximum delay, $\frac{b}{2}$ is the maximum Doppler shift, and $\theta_v$ is the Doppler shift.

**11.** The method according to claim 10, wherein a peak of a cross-ambiguity function of a third sequence relative to a fourth sequence is on a delay plane outside $[0, a]$, and the third sequence and the fourth sequence are first sequences with a same Doppler shift but different cyclic shifts.

**12.** The method according to claim 10 or 11, wherein a peak of a cross-ambiguity function of a fifth sequence relative to a sixth sequence is on a Doppler shift plane outside $[-\frac{b}{2} + \theta_{v1}, \frac{b}{2} + \theta_{v1}]$, the fifth sequence and the sixth sequence are the first sequences with different Doppler shifts, and $\theta_{v1}$ is a Doppler shift of the fifth sequence.

**13.** The method according to any one of claims 5 to 12, wherein the plurality of first sequences have a same Doppler shift but different cyclic shifts, the plurality of first sequences comprise a target sequence, and the method further comprises:

receiving a first mixed signal; and

determining, based on a location of a first peak in at least one peak of a cross-ambiguity function formed by a target sensing signal and the first mixed signal, whether the first peak is a peak generated by the target sensing signal and an echo signal corresponding to the target sensing signal, wherein the target sensing signal is generated based on the target sequence.

14. The method according to claim 13, wherein the determining, based on the location of the first peak in the at least one peak of the cross-ambiguity function formed by the target sensing signal and the first mixed signal, whether the first peak is the peak generated by the target sensing signal and the echo signal corresponding to the target sensing signal comprises:

when the first peak is on the delay plane outside [0, *a*], determining that the first peak is not the peak generated by the target sensing signal and the echo signal corresponding to the target sensing signal, wherein *a* is the maximum delay.

15. The method according to claim 13, wherein the determining, based on the location of the first peak in the at least one peak of the cross-ambiguity function formed by the target sensing signal and the first mixed signal, whether the first peak is the peak generated by the target sensing signal and the echo signal corresponding to the target sensing signal comprises:

when the first peak is on a Doppler shift plane outside $\left[-\frac{b}{2}+\theta_{v2}, \frac{b}{2}+\theta_{v2}\right]$., determining that the first peak is not the peak generated by the target sensing signal and the echo signal corresponding to the target sensing signal, wherein $\frac{b}{2}$ is the maximum Doppler shift, and $\theta_{v2}$ is a Doppler shift of the target sequence.

16. The method according to claim 13, wherein the determining, based on the location of the first peak in the at least one peak of the cross-ambiguity function formed by the target sensing signal and the first mixed signal, whether the first peak is the peak generated by the target sensing signal and the echo signal corresponding to the target sensing signal comprises:

when the first peak is on a delay-Doppler shift plane within $[0, a] \times \left[-\frac{b}{2}+\theta_{v2}, \frac{b}{2}+\theta_{v2}\right]$, determining that the first peak is the peak generated by the target sensing signal and the echo signal corresponding to the target sensing signal, wherein *a* is the maximum delay, $\frac{b}{2}$ is the maximum Doppler shift, and $\theta_{v2}$ is a Doppler shift of the target sequence.

17. The method according to any one of claims 1 to 16, wherein the Doppler shift is preconfigured, or is determined through negotiation with another access network device, or is configured by a control node.

18. A communication apparatus, comprising a module configured to perform the method according to any one of claims 1 to 17.

19. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 17 by using a logic circuit or executing code instructions.

20. A communication apparatus, comprising a processor, wherein the processor is configured to run a computer program or instructions, to implement the method according to any one of claims 1 to 17.

21. A communication chip, wherein the communication chip stores instructions, and when the chip runs on a communication device, the method according to any one of claims 1 to 17 is implemented.

22. A computer-readable storage medium, wherein the storage medium stores a computer program or instructions, and when the computer program or the instructions are executed by a communication apparatus, the method according to any one of claims 1 to 17 is implemented.

**23.** A computer program product, comprising computer program code, wherein when the computer program code is run on a communication apparatus, the communication apparatus implements the method according to any one of claims 1 to 17.

FIG. 1B

FIG. 1A

Access network
device

Sensing signal

Echo signal

Sensing signal

Echo signal

Access network
device

Sensing target

FIG. 2

| Access network device | | Sensing target |

S301. Generate a first
sequence (based on a Doppler
shift and a cyclic shift)

S302. First sensing signal
(based on the first sequence,
where there are one or more
first sensing signals)

S303. First mixed signal

S304. Determine, based on a location of a
first peak in at least one peak of a cross-
ambiguity function formed by a target sensing
signal and the first mixed signal, whether the
first peak is a peak generated by the target
sensing signal and an echo signal
corresponding to the target sensing signal

FIG. 3

Auto-ambiguity function of a second sequence B

FIG. 4A

(Axes: Auto-ambiguity function value — 1, 0.8, 0.6, 0.4, 0.2, 0; Cyclic shift (delay) — 500, 400, 300, 200, 100, 0; Doppler shift $f$ — −3, −2, −1, 0, 1, 2, 3; Peak)

Cross-ambiguity function between B and $B_a$ [...]

FIG. 4B

(Axes: Cross-ambiguity function value — 1, 0.8, 0.6, 0.4, 0.2, 0; Cyclic shift (delay) — 500, 400, 300, 200, 100, 0; Doppler shift $f$ — −3, −2, −1, 0, 1, 2, 3; Peak)

Cross-ambiguity function between $B_a$ [...] and B [...]

in sequence corresponding to [...]

FIG. 4C

(Axes: Cross-ambiguity function value — 1, 0.8, 0.6, 0.4, 0.2, 0; Cyclic shift (delay) — 500, 400, 300, 200, 100, 0; Doppler shift $f$ — −3, −2, −1, 0, 1, 2, 3; Peak)

Communication apparatus 500

501 502

Processing module ◄──────► Transceiver module

FIG. 5

Communication apparatus 600

601 604

Processor
CPU 0
CPU 1

Processor
CPU 0
CPU 1

602

Memory

603

Transceiver

FIG. 6

## INTERNATIONAL SEARCH REPORT

| International application No. |
| --- |
| **PCT/CN2023/124290** |

**A.    CLASSIFICATION OF SUBJECT MATTER**

G01S7/41(2006.01)i

According to International Patent Classification (IPC) or to both national classification and IPC

**B.    FIELDS SEARCHED**

Minimum documentation searched (classification system followed by classification symbols)

G01S7/-

Documentation searched other than minimum documentation to the extent that such documents are included in the fields searched

Electronic data base consulted during the international search (name of data base and, where practicable, search terms used)

CNABS, CNTXT, CNKI, ENTXTC: 感知, 回波信号, 接入网, 离散傅里叶, DFT, 通感一体化, 通信感知一体化, 通信与感知一体化, ISAC, 线性反馈位移寄存器序列, 序列, m序列, 多普勒, 频偏, 频移, 循环移位; VEN, ENTXT, WOTXT, EPTXT, USTXT, 3GPP: Communication, cyclic, delay, DFT, doppler, ISAC, sequence?, discrete fourier transform, discrete fourier transform, Integrated Sensing

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2023000196 A1 (GUANGDONG OPPO MOBILE TELECOMMUNICATIONS CORP., LTD.) 26 January 2023 (2023-01-26)<br>    description, paragraphs [0050]-[0069], and figures 1-2 | 1-23 |
| A | CN 116489672 A (HUAWEI TECHNOLOGIES CO., LTD.) 25 July 2023 (2023-07-25)<br>    entire document | 1-23 |
| A | CN 115685115 A (PEKING UNIVERSITY) 03 February 2023 (2023-02-03)<br>    entire document | 1-23 |
| A | CN 114325679 A (SOUTH UNIVERSITY OF SCIENCE AND TECHNOLOGY et al.) 12 April 2022 (2022-04-12)<br>    entire document | 1-23 |
| | CN 116488965 A (HARBIN ENGINEERING UNIVERSITY) 25 July 2023 (2023-07-25) | |
| A | CN 116193612 A (WEIWO SOFTWARE TECHNOLOGY CO., LTD.) 30 May 2023 (2023-05-30)<br>    entire document | 1-23 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2024** | **19 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124290**

| Patent document cited in search report | | | Publication date (day/month/year) | Patent family member(s) | | | Publication date (day/month/year) |
|---|---|---|---|---|---|---|---|
| WO | 2023000196 | A1 | 26 January 2023 | None | | | |
| CN | 116489672 | A | 25 July 2023 | WO | 2023134396 | A1 | 20 July 2023 |
| CN | 115685115 | A | 03 February 2023 | None | | | |
| CN | 114325679 | A | 12 April 2022 | None | | | |
| CN | 116488965 | A | 25 July 2023 | None | | | |
| CN | 116193612 | A | 30 May 2023 | WO | 2023093644 | A1 | 01 June 2023 |

Form PCT/ISA/210 (patent family annex) (July 2022)